(19) Europäisches Patentamt
European Patent Office
Office européen des brevets

(11) Veröffentlichungsnummer: **0 335 236 B1**

(12) # EUROPÄISCHE PATENTSCHRIFT

(45) Veröffentlichungstag der Patentschrift: **07.09.94**

(51) Int. Cl.$^{5}$: **C09B 23/08**, G11B 7/24

(21) Anmeldenummer: **89105093.2**

(22) Anmeldetag: **22.03.89**

Die Akte enthält technische Angaben, die nach dem Eingang der Anmeldung eingereicht wurden und die nicht in dieser Patentschrift enthalten sind.

(54) **Methinfarbstoffe sowie optisches Aufzeichnungsmedium, enthaltend die neuen Farbstoffe.**

(30) Priorität: **29.03.88 DE 3810642**

(43) Veröffentlichungstag der Anmeldung:
**04.10.89 Patentblatt 89/40**

(45) Bekanntmachung des Hinweises auf die Patenterteilung:
**07.09.94 Patentblatt 94/36**

(84) Benannte Vertragsstaaten:
**BE CH DE FR GB IT LI NL**

(56) Entgegenhaltungen:
**EP-A- 0 102 781**
**EP-A- 0 217 245**
**WO-A-84/02794**
**GB-A- 862 445**
**GB-A- 988 627**

(73) Patentinhaber: **BASF Aktiengesellschaft**
**Carl-Bosch-Strasse 38**
**D-67063 Ludwigshafen (DE)**

(72) Erfinder: **Acker, Michael, Dr.**
**Glockenzehnten 45**
**D-6900 Heidelberg (DE)**
Erfinder: **Dust, Matthias, Dr.**
**Teichgasse 7**
**D-6700 Ludwigshafen (DE)**
Erfinder: **Neumann, Peter, Dr.**
**Poststrasse 28**
**D-6800 Mannheim 31 (DE)**
Erfinder: **Brosius, Sybille, Dr.**
**L 9,3**
**D-6800 Mannheim 1 (DE)**
Erfinder: **Schomann, Klaus Dieter, Dr.**
**Kopernikusstrasse 47**
**D-6700 Ludwigshafen (DE)**
Erfinder: **Kuppelmaier, Harald, Dr.**
**Kuehler Grund 30a**
**D-6900 Heidelberg (DE)**

EP 0 335 236 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die vorliegende Erfindung betrifft Methinfarbstoffe der Formel I

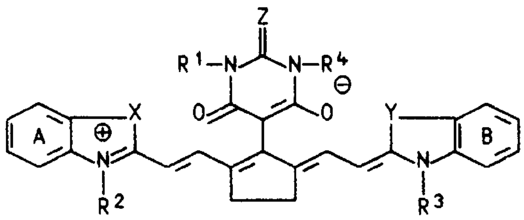

(I),

in der

- $R^1$ und $R^4$ gleich oder verschieden sind und unabhängig voneinander jeweils $C_1$-$C_{22}$-Alkyl, das gegebenenfalls durch Hydroxy, Phenyl, Halogen, $C_1$-$C_4$-Alkanoyl, Carboxy, $C_1$-$C_4$-Alkanoylamino, $C_1$-$C_4$-Alkoxycarbonyl oder $C_1$-$C_4$-Alkoxycarbonylamino substituiert und/oder durch ein oder mehrere Sauerstoffatome, eine oder mehrere Iminogruppen oder eine oder mehrere $C_1$-$C_4$-Alkyliminogruppen unterbrochen ist,
- $R^2$ und $R^3$ gleich oder verschieden sind und unabhängig voneinander jeweils $C_6$-$C_{22}$-Alkyl, das gegebenenfalls durch Hydroxy, Phenyl, Halogen, $C_1$-$C_4$-Alkanoyl, Carboxy, $C_1$-$C_4$-Alkanoylamino, $C_1$-$C_4$-Alkoxycarbonyl oder $C_1$-$C_4$-Alkoxycarbonylamino substituiert und/oder durch ein oder mehrere Sauerstoffatome, eine oder mehrere Iminogruppen oder eine oder mehrere $C_1$-$C_4$-Alkyliminogruppen unterbrochen ist, oder gegebenenfalls durch $C_1$-$C_4$-Alkyl oder Halogen substituiertes $C_5$-$C_7$-Cycloalkyl,
- X und Y gleich oder verschieden sind und unabhängig voneinander jeweils Sauerstoff, Schwefel,

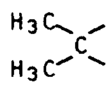

oder -CH=CH- und

- Z Sauerstoff oder Schwefel bedeuten, und die Ringe A und B benzoanelliert und/oder durch $C_1$-$C_{22}$-Alkyl, $C_1$-$C_{12}$-Alkoxy, $C_1$-$C_{12}$-Alkylthio, Cyano, $C_1$-$C_{12}$-Mono- oder Dialkylamino, Pyrrolidino, Piperidino, Morpholino, Piperazino, N-($C_1$-$C_4$-Alkylpiperazino, Chlor oder Brom substituiert sein können, sowie Methinfarbstoffe, erhältlich durch Umsetzung von einem organischen Mono- oder Polyisocyanat mit solchen Methinfarbstoffen der Formel I, in der nur die Reste $R^1$ und/oder $R^4$ eine mit einem organischen Mono- oder Polyisocyanat reagierende Gruppe aufweisen, mit der Maßgabe, daß die Reste $R^2$ und/oder $R^3$ auch die Bedeutung des obengenannten Rests $R^1$ aufweisen können, wenn mindestens einer der beiden Reste X und Y für -CH=CH- steht und/oder die Methinfarbstoffe der Formel I mit einem organischen Mono- oder Polyisocyanat umgesetzt wurden.

Die Erfindung betrifft weiterhin ein optisches Aufzeichungsmedium, enthaltend einen Träger und eine gegenüber Laserlicht empfindliche Farbstoff enthaltende Schicht, wobei der Farbstoff ein Methinfarbstoff ist, wie er oben beschrieben ist.

Aufzeichnungsmedien, die mit Strahlen hoher Energiedichte, z. B. Laserlicht, eine lokal begrenzte Zustandsänderung erfahren, sind bekannt. Mit dieser thermisch ausgelösten Zustandsänderung, z. B. Verdampfen, Änderung des Fließverhaltens oder Ausbleichen, ist eine Änderung der optischen Eigenschaften, beispielsweise der Absorption durch Änderung des Absorptionsmaximums oder der Extinktion verbunden, welche zur Information - oder Datenaufzeichnung ausgenutzt werden kann.

Als Lichtquelle für ein optisches Aufzeichnungsmedium eignen sich beispielsweise Halbleiterlaser, die Licht im nahen Infrarot emittieren. Festkörper-Injektionlaser, vor allem der AlGaAs-Laser, der im Wellenlängenbereich zwischen etwa 650 und 900 nm arbeitet, sind hierbei besonders zu nennen. Daher besteht besonders Interesse an solchen Aufzeichnungsmaterialien, die Strahlung im Wellenlängenbereich zwischen ca. 650 und 900 nm absorbieren und sich zu dünnen, homogenen Schichten verarbeiten lassen.

So ist es beispielsweise bekannt, Methinfarbstoffe, die als Kettenglied eine Cyclopentenylbarbitursäure-Gruppe aufweisen, für diesen Zweck zu verwenden. In der EP-A-102 781 sowie der US-A-4 551 413 werden

z.B. einige symmetrische Heptamethinfarbstoffe dieser Klasse mit 3,3-Dimethylindolenin-, Benzthiazol- oder Benzoxazol-Endgruppen beschrieben.

Aufgabe der vorliegenden Erfindung war es, neue strahlungsempfindliche Produkte bereitzustellen, die im Wellenlängenbereich der verwendeten Halbleiterlaser eine gute Reflektion und eine hohe Absorption aufweisen. Sie sollten außerdem in einfacher Weise herzustellen, über einen langen Zeitraum hinweg stabil und in Polymeren leicht löslich sein. Der Erfindung lag weiterhin die Aufgabe zugrunde, ein neues optisches Aufzeichungsmedium bereitzustellen, wobei die die neuen Produkte enthaltenden Schichten homogen sein, eine gute Haftung auf den gebräuchlichen Trägermaterialien aufweisen und über einen langen Zeitraum hinweg stabil sein sollten. Darüberhinaus sollten diese Aufzeichnungsmedien mittels eines Halbleiterlasers beschreibbar und anschließend gut lesbar sein und sich durch ein möglichst hohes Signal:Rausch-Verhältnis auszeichnen.

Demgemäß wurden die eingangs definierten Methinfarbstoffe gefunden. Außerdem wurde ein optisches Aufzeichnungsmedium, enthaltend einen Träger und eine gegenüber Laserlicht empfindliche, Farbstoff enthaltende Schicht gefunden, wobei der Farbstoff einen eingangs definierten Methinfarbstoff darstellt.

Alle in den obengenannten Resten der Formel I auftretenden Alkylgruppen können sowohl linear als auch verzweigt sein.

Wenn Alkylreste auftreten, die durch ein oder mehrere Sauerstoffatome, eine oder mehrere Iminogruppen oder eine oder mehrere $C_1$-$C_4$-Alkyliminogruppen unterbrochen sind, sind jene bevorzugt, bei denen diese Unterbrechung jeweils ein- bis dreimal auftritt.

Geeignete Reste $R^1$ und $R^4$ sind beispielsweise Methyl, Ethyl, Propyl, Isopropyl, Butyl, Isobutyl, sec-Butyl, tert-Butyl, Pentyl, Isopentyl, Neopentyl, tert-Pentyl, Benzyl, 1- oder 2-Phenylethyl, Trifluormethyl, Trichlormethyl, Brommethyl, 2-Bromethyl, 1,1,1-Trifluorethyl, Heptafluorpropyl, 4-Brombutyl, 2-Methoxyethyl, 2-Ethoxyethyl, 2-Propoxyethyl, 2-Benzyloxyethyl, 2-Ethoxypropyl, 3-Ethoxypropyl, 3-Benzyloxypropyl, Propan-2-on-1-yl, Butan-3-on-1-yl, Butan-3-on-2-yl, 2-Ethylpentan-3-on-1-yl, Carboxymethyl, 2-Carboxyethyl, 3-Caroxypropyl, 4-Carboxybutyl, 5-Carboxypentyl, 4-Carboxy-3-oxabutyl, Acetylaminomethyl, 2-(Acetylamino)ethyl, 2-(Propionylamino)ethyl, 2-(Butyrylamino)ethyl. Ethoxycarbonylmethyl, 2-(Ethoxycarbonyl)ethyl, 2- oder 3-(Methoxycarbonyl)propyl, Ethoxycarbonylaminomethyl, 2-(Ethoxycarbonylamino)ethyl, 2-Hydroxyethyl, 2-Hydroxypropyl, 3-Hydroxypropyl, 2-Hydroxybutyl, 4-Hydroxybutyl, 2-Methylaminoethyl, 2-Dimethylaminoethyl, 2-Ethylaminoethyl, 2-Diethylaminoethyl, 2- oder 3-Methylaminopropyl oder 2- oder 3-Dimethylaminopropyl.

Geeignete Reste $R^1$ und $R^4$ sind weiterhin, ebenso wie die Reste $R^2$ und $R^3$, z.B. Hexyl, 2-Methylpentyl, Heptyl, Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl, Eicosyl, Heneicosyl, Docosyl (die Bezeichnungen Isooctyl, Isononyl, Isodecyl und Isotridecyl sind Trivialbezeichnungen und stammen von den nach der Oxosynthese erhaltenen Alkoholen [vgl. dazu Ullmanns Enzyklopädie der technischen Chemie, 4. Auflage, Band 7, Seiten 215 bis 217, sowie Band 11, Seiten 435 und 436]), 2-Butoxyethyl, 3,6-Dioxaheptyl, 3,6-Dioxaoctyl, 3,6-Dioxadecyl, 3,6,9-Trioxadecyl, 4-Oxa-6-ethyldecyl, 3,6-Dioxa-7-phenylheptyl, 6-Bromhexyl, 7-Bromheptyl, 8-Bromoctyl, 6-Hydroxyhexyl, 7-Hydroxyheptyl, 8-Hydroxyoctyl, 8-Phenyloctyl, 10-Acetyldecyl, 8-Carboxyoctyl, 6-(Acetylamino)hexyl, 8-(Methoxycarbonyl)octyl oder 10-(Ethoxycarbonylamino)decyl.

Reste $R^2$ und $R^3$ sind weiterhin beispielsweise Cyclopentyl, Cyclohexyl, Cycloheptyl, 3-Methylcyclopentyl, 3-Methylcyclohexyl, 4-Ethylcyclohexyl oder 2,3-Dichlorcyclohexyl.

Als organische Mono- oder Polyisocyanate kommen alle Verbindungen dieser Klasse in Betracht, die wenigstens eine Isocyanatgruppe (-N=C=O) aufweisen. Solche Verbindungen sind an sich bekannt und beispielsweise in der DE-A-2 310 559 und der dort zitierten Literatur beschrieben.

Als einzelne organische Monoisocyanate sind beispielhaft Methylisocyanat, Ethylisocyanat, Propylisocyanat, Butylisocyanat oder Phenylisocyanat zu nennen.

Als organische Polyisocyanate kommen die an sich bekannten aliphatischen, cycloaliphatischen oder aromatischen mehrwertigen Isocyanate in Frage. Im einzelnen seien beispielhaft genannt: 1,6-Hexamethylen-diisocyanat, 1-Isocyanato-3,3,5-trimethyl-3-isocyanatomethyl-cyclohexan, Isophorondiisocyanat, Naphthylen-1,5-diisocyanat, 2,4- oder 2,6-Hexahydrotoluylen-diisocyanat oder die entsprechenden Isomerengemische, 4,4'-, 2,2' - oder 2,4-Dicyclohexylmethan-diisocyanat oder die entsprechenden Isomerengemische, Mischungen aus 4,4'-, 2,2'- und 2,4'-Dicyclohexylmethan-diisocyanaten und Polymethylen-polycyclohexylenpolyisocyanaten, 2,4- oder 2,6-Toluylen-diisocyanat oder den entsprechenden Isomerengemischen, 4,4'-, 2,4 - oder 2,2'-Diphenylmethan-diisocyanat oder den entsprechenden Isomerengemischen, Mischungen aus 4,4'-, 2,4' - und 2,2'-Diphenylmethan-diisocyanaten und Polyphenyl-polymethylenpolyisocyanaten (Roh-MDI) oder Mischungen aus Roh-MDI und Toluylen-diisocyanaten.

Man kann auch sogenannte modifizierte mehrwertige Isocyanate, d.h. Produkte, die durch chemische Umsetzung obiger Di- und/oder Polyisocyanate erhalten werden, verwenden. Beispielshaft genannt seien Ester-, Harnstoff-, Biuret-, Allophanat-, Carbodiimid-, Isocyanurat- und/oder Urethangruppen enthaltende Di- und/oder Polyisocyanate. Im einzelnen kommen beispielsweise in Betracht: Urethangruppen enthaltende aromatische Polyisocyanate mit NCO-Gehalten von 33,6 bis 15 Gew.-%, vorzugsweise von 31 bis 21 Gew.-%, beispielsweise mit niedermolekularen Diolen, Triolen, Dialkylenglykolen, Trialkylenglykolen oder Polyoxyalkylen-glykolen mit Molekulargewichten bis 800 modifiziertes 4,4'-Diphenylmethan-diisocyanat oder Toluylen-diisocyanat, wobei als Di- oder Polyoxyalkylen-glykole, die einzeln oder als Gemische eingesetzt werden können, beispielsweise genannt seien: Diethylen-, Dipiopylen-, Polyoxyethylen-, Polyoxypropylen- oder Polyoxypropylen-polyoxyethylen-glykole. Geeignet sind auch NCO-Gruppen enthaltende Prepolymere mit NCO-Gehalten von 21 bis 9 Gew.-%, vorzugsweise von 21 bis 14 Gew.-%. Ferner sind flüssige Carbodiimidgruppen und/oder Isocyanuratringe enthaltende Polyisocyanate mit NCO-Gehalten von 33,6 bis 15 Gew.%, vorzugsweise 31 bis 21 Gew.-%, z.B. auf Basis von 4,4'-, 2,4' - und/oder 2,2' -Diphenylmethan-diisocyanat und/oder 2,4- und/oder 2,6-Toluylen-diisocyanat oder den entsprechenden Isomerengemischen, 4,4'-, 2,4'- oder 2,2'-Diphenylmethan-diisocyanat oder den entsprechenden Isomerengemischen z. B. aus 4,4' - und 2,4' -Diphenylmethan-diisocyanaten, Mischungen aus Diphenylmethan-diisocyanaten und Polyphenyl-polymethylen-polyisocyanaten (Roh-MDI) oder Gemische aus Toluylen-diisocyanaten und Roh-MDI geeignet.

Zur Reaktion mit einem organischen Mono- oder Polyisocyanat befähigte funktionelle Gruppen, wie sie in den Resten $R^1$ und/oder $R^4$ auftreten können, sind beispielsweise Hydroxy, Carboxy oder auch durch eine Iminogruppe (-NH-) unterbrochenes Alkyl.

Bei der Umsetzung der Methinfarbstoffe der Formel I mit organischen Mono- oder Polyisocyanaten bilden sich, abhängig von der funktionellen Gruppe im Rest $R^1$ und/oder $R^4$, z. B. Urethane -O-CO-NH- (mit Hydroxy), Amide -CO-NH- (mit Carboxy) oder Harnstoffe -NH-CO-NH (mit Imino) aus.

Für den Fall, daß die Reste $R^1$ und/oder $R^4$ zur Reaktion mit organischen Mono- oder Polyisocyanaten befähigte Gruppen aufweisen und diese mit einem Polyisocyanat umgesetzt werden, können auch oligomere oder polymere Produkte entstehen, die den vom Farbstoff der Formel I sich ableitenden Rest mehrmals enthalten.

Bevorzugt sind Methinfarbstoffe der Formel I in der $R^1$ und $R^4$ unabhängig voneinander $C_1$-$C_{22}$-Alkyl, das gegebenenfalls durch 1 bis 3 Sauerstoffatome unterbrochen ist, $C_1$-$C_{12}$-Hydroxyalkyl oder $C_1$-$C_{12}$-Carboxyalkyl, $R^2$ und $R^3$ unabhängig voneinander $C_6$-$C_{22}$-Alkyl, das gegebenenfalls durch 1 bis 3 Sauerstoffatome unterbrochen ist, $C_6$-$C_{22}$-Bromalkyl, $C_6$-$C_{22}$-Carboxyalkyl oder ($C_1$-$C_4$-Alkoxycarbonyl)-$C_6$-$C_{22}$-alkyl und Z Sauerstoff bedeuten und X, Y und die Ringe A und B jeweils die obengenannte Bedeutung besitzen.

Bevorzugt sind weiterhin Methinfarbstoffe der Formel I, in der $R^2$ identisch mit $R^3$, X identisch mit Y sowie der Ring A identisch mit dem Ring B ist.

Weiterhin bevorzugt sind Methinfarbstoffe, erhältlich durch Umsetzung von einem organischen Mono- oder Polyisocyanat mit solchen Methinfarbstoffen der Formel I, in der nur der Rest $R^4$ eine mit einem organischen Mono- oder Polyisocyanat reagierende Gruppe aufweist. Insbesondere zu nennen sind dabei solche Methinfarbstoffe, die erhältlich sind durch Umsetzung mit einem Methinfarbstoff der Formel I, in der $R^4$ $C_1$-$C_{22}$-Hydroxyalkyl bedeutet.

Besonders bevorzugt sind Methinfarbstoffe der Formel I, wobei $R^1$ und $R^4$ unabhängig voneinander $C_1$-$C_{12}$-Alkyl, das gegebenenfalls durch 1 bis 3 Sauerstoffatome unterbrochen ist, oder $C_1$-$C_{12}$-Hydroxyalkyl, $R^2$ und $R^3$ unabhängig voneinander $C_6$-$C_{12}$-Alkyl, das gegebenenfalls durch 1 bis 3 Sauerstoffatome unterbrochen ist, und Z Sauerstoff bedeuten, die Ringe A und B unsubstituiert oder durch Chlor substituiert sind und X und Y jeweils die obengenannte Bedeutung besitzen.

Weiterhin besonders bevorzugt sind solche Methinfarbstoffe, die erhältlich sind durch Umsetzung der zuletzt genannten Methinfarbstoffe mit einem organischen Mono- oder Polyisocyanat, wobei nur $R^4$ an der Umsetzung teilnimmt.

Die neuen Farbstoffe der Formel I können nach an sich bekannten Methoden, wie sie beispielsweise aus der US-A-2 955 939 bekannt sind, hergestellt werden. Beispielsweise kondensiert man eine Cycloammoniumverbindung der Formel IIa und/oder IIb

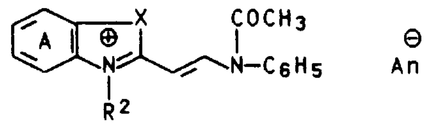

(IIa),

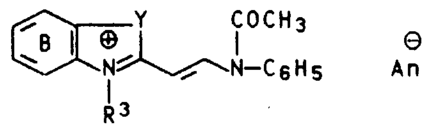

(IIb),

wobei die Ringe A und B, $R^2$ und $R^3$ jeweils die obengenannte Bedeutung besitzen und $An^{\ominus}$ für ein anorganisches oder organisches Anion (z.B. Chlorid, Bromid, Iodid, Tetrafluoroborat, Methosulfat oder p-Toluolsulfonat) steht, mit einem Barbitursäurederivat der Formel III

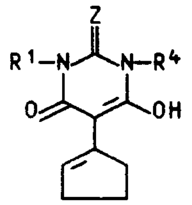

(III),

in der $R^1$, $R^4$ und Z jeweils die obengenannte Bedeutung besitzen.

Die Kondensation findet beispielsweise in einem inerten organischen Lösungsmittel (z. B. Ethanol, Propanol, Butanol oder deren Gemische) bei einer Tempertur von 80 bis 120 °C in Gegenwart einer Base (z.B. Triethylamin, Pyridin, Morpholin oder Piperidin) statt. Zweckmäßig verwendet man Cycloammoniumverbindung II, Barbitursäurederivat III und Base im Molverhältnis 1 : 1 : 1 bis 2 : 1 : 2 .

Die als Ausgangsstoffe verwendeten Verbindungen der Formel II und III sind bekannt oder können nach an sich bekannten Verfahren, wie sie beispielsweise in A. Weissberger, E.C.Taylor "Chemistry of Heterocyclic Compounds", Bd. 30 Interscience Publ. 1977, beschrieben sind, hergestellt werden.

Die Umsetzung der Methinfarbstoffe I mit einem organischen Mono- oder Polyisocyanat erfolgt ebenfalls nach an sich bekannten Methoden. Dazu wird ein geeigneter Methinfarbstoff der Formel I mit einem organischen Mono- oder Polyisocyanat in einem inerten organischen Lösungsmittel (z.B. Methylenchlorid, 1,1,2-Trichlorethan, Toluol, Ligroin oder Cyclohexanon) bei einer Temperatur von 20 bis 60 °C, gegebenenfalls in Gegenwart eines Katalysators (z. B. tertiäre Amine, Tetralkylammoniumhydroxide oder organische Zinnverbindungen) umgesetzt. Das Molverhältnis richtet sich dabei nach der Funktionalität des Isocyanats. Im allgemeinen wird je Äquivalent Isocyanat ungefähr ein Äquivalent des zur Umsetzung befähigten Farbstoffs verwendet.

Die neuen Methinfarbstoffe weisen eine hohe molare Absorption im Bereich von 700 bis 900 nm auf. Sie sind in organischen Lösungsmitteln und/oder thermoplastischen oder vernetzten Kunststoffen gut löslich.

Die Erfindung betrifft weiterhin ein optisches Aufzeichnungsmedium, enthaltend einen Träger und eine gegenüber Laserlicht empfindliche, Farbstoff enthaltende Schicht, wobei der Farbstoff einen oben definierten Methinfarbstoff darstellt.

Der Aufbau der Aufzeichnungsmedien ist an sich bekannt (siehe beispielsweise J.Vac.Sci. Technol. 18 (1), Jan./Feb. 1981, S. 105).

Als Träger kommen z. B. Glasplatten oder -scheiben, oder Kunststoffplatten oder -scheiben, insbesondere Platten oder Scheiben aus Polymethylmethacrylat, Polystyrol, Polystyrol-Copolymeren, Polyvinylchlorid, Polymethylpenten oder Polycarbonat in Betracht, die gegebenenfalls Spurrillen aufweisen.

Der Träger kann dabei die Form eines Bandes, einer quadratischen oder rechteckigen Platte oder vorzugsweise einer runden Scheibe haben, wobei die für laseroptische Aufzeichnungsmaterialien üblichen und bekannten Scheiben eines Durchmessers von 10 oder 13 cm bevorzugt werden.

Das erfindungsgemäße Aufzeichnungsmedium kann frei von Bindemitteln sein. Vorzugsweise enthält das Aufzeichnungsmedium aber ein Bindemittel. Als solche kommen beispielsweise Siliconharze, Epoxidharze, Acrylatharze, Polystyrolhomo- und -copolymerisate, Polyvinylcarbazol, Polyvinylpyrrolidon, Polyvinylestercopolymere, Polyvinylidenchloridcopolymere oder Polyvinylchlorid in Betracht.

Zwischen der lichtabsorbierenden Schicht und dem Träger kann eine reflektierende Schicht vorhanden sein, so daß das eingestrahlte und durch die farbige Schicht wandernde Licht, so weit es nicht absorbiert wird, an die Reflektorschicht reflektiert wird und nochmals durch die gefärbte Schicht wandert.

Die Belichtung kann auch durch ein transparentes Substrat erfolgen. Als Schichtfolge kommt dann die Anordnung
Substrat-Absorberschicht-gegebenenfalls Reflektorschicht in Betracht.

Geeignete lichtreflektierende Materialien sind z. B. Aluminium, Rhodium, Gold, Zinn, Blei, Wismut, Kupfer oder dielektrische Spiegel. Die lichtreflektierende Schicht sollte so dick sein, daß sie das zur Aufnahme oder zum Abtasten benutzte Licht möglichst vollständig reflektiert.

Für diesen Zweck sind Spiegel mit geringer Wärmeleitfähigkeit vorteilhaft. Der Träger oder die lichtreflektierende Schicht müssen eine optisch glatte, ebene Oberfläche aufweisen und an der Oberfläche so beschaffen sein, daß die absorbierende Schicht darauf fest haftet. Um die Oberflächenqualität und Adhäsionsphänomene günstig zu beeinflussen, kann der Träger und/oder der Reflektor mit einer Glättungsschicht aus einem duroplastischen oder thermoplastischen Material versehen werden.

Wenn das optische Aufzeichnungsmedium einen metallischen Reflektor aufweist, erfolgt das Aufbringen der metallischen Reflektionsschicht vorzugsweise nach bekannten Methoden, z. B. durch Aufdampfen im Vakuum oder auch durch Aufbringen geeigneter Metallfolien auf den Träger.

Das erfindungsgemäße Aufzeichnungsmedium wird durch Aufschleudern einer Lösung, enthaltend einen oben beschriebenen Methinfarbstoff, gegebenenfalls ein polymeres Bindemittel und ein Lösungsmittel, auf einen Träger aufgebracht und die Schicht an der Luft getrocknet. Der Film kann auch im Vakuum, bei erhöhter Temperatur oder gegebenenfalls mit Strahlung getrocknet werden.

Als geeignete Lösungsmittel sind z. B. 1,1,2-Trichlorethan, Methylethylketon, Diacetonalkohol, Toluol, Methanol, Ethanol oder Propanol oder deren Gemische zu nennen.

Gegebenenfalls kann die aufzuschleudernde Lösung Additive, wie Antioxidantien, Singulett-Sauerstoff-Quencher oder UV-Absorber enthalten.

Es ist weiterhin auch möglich, auf die Farbstoff-in-Polymer-Schicht eine Schutzschicht aufzubringen. Hierzu bieten sich eine Reihe von Polymeren an, welche durch Aufschleudern, Aufrakeln, Tauchen von gelösten Polymeren oder durch Aufdampfen im Vakuum, insbesondere von fluorierten Polymeren, eine Schutzschicht bilden können.

Wenn das Aufzeichnungssystem aus zwei gleichen oder verschiedenen Aufzeichnungsmedien in Form eines "Sandwich" aufgebaut wird, kann im allgemeinen auf eine Schutzschicht verzichtet werden. Neben größerer mechanischer und rotationsdynamischer Stabilität bietet der "Sandwich"-Aufbau den Vorteil der doppelten Speicherkapazität.

Auf die Schutz- und/oder Zwischenschicht kann bei ausreichender Qualität des optischen Aufzeichungsmediums überlicherweise verzichtet werden. Wenn aber auf Zwischenschichten nicht verzichtet werden kann, muß unter Berücksichtigung des Brechungsindex des dazu verwendeten Materials und der verwendeten Laserlichtwellenlänge deren Schichtdicke so gewählt werden, daß keine störenden Interferenzen auftreten können.

Das erfindungsgemäße optische Aufzeichnungsmedium weist bei der Wellenlänge der kommerziell erhältlichen Halbleiterlaser (ca. 650 bis 900 nm) eine hohe Absorption auf. Die Farbstoff-in-Polymer-Systeme können auf eine lichtreflektierende Schicht so aufgebracht werden, daß sich glatte, homogene Absorptionsschichten hoher optischer Qualität ergeben, die eine günstige Schwellenenergie besitzen, und in die die zu speichernde Information in Form von Pits eingeschrieben werden kann, wodurch ein ausgezeichnetes Signal : Rausch-Verhältnis resultiert.

Die Aufzeichungsmedien gemäß der vorliegenden Erfindung sind mit einem Halbleiter-Laser beschreibbar und lesbar. Aufzeichnungsmedien gemäß der Erfindung sind gegenüber atmosphärischen Einflüssen und Tageslicht sehr stabil.

Aufgrund der hohen Lichtabsorption der neuen Methinfarbstoffe sind die neuen Aufzeichungsmedien sehr empfindlich gegenüber dem Licht von im nahen Infrarot emittierenden Festkörper-Injektionslasern. Insbesondere ist hier der AlGaAs-Laser zu nennen, der im Wellenlängenbereich von ca. 650 bis 950 nm arbeitet. Aufgrund der geringen Größe des Bauelementes, seines geringen Energiebedarfs und der Möglichkeit der direkten Modulation der optischen Ausgangsleistung durch Modulation des elektrischen Antriebsstromes eignen sich solche Lasertypen besonders gut.

Die folgenden Beispiele sollen die Erfindung näher erläutern.

A. Herstellung der Farbstoffe

Beispiel 1

Zu einer Lösung von 55,3 g (70 mmol) 3,3-Dimethyl-1-n-dodecyl-2[2-(N-acetylanilino)vinyl]-indolenium-iodid und 11,3 g (35 mmol) 5-(Cyclopenten-1-yl)-1-hydroxyethyl-3-hexylbarbitursäure in 280 ml abs. Ethanol wurden 19,6 ml Triethylamin zugegeben und anschließend 30 Minuten unter Rückfluß erhitzt. Die Reaktionslösung wurde anschließend unter vermindertem Druck eingeengt und der Rückstand mit siedendem Aceton verrührt. Nach dem Abkühlen auf Raumtemperatur wurde im Methanol/Trockeneisbad abgekühlt, der ausgefallene Rohfarbstoff abgesaugt und zuerst mit Aceton und dann mit Ether gewaschen.Die Reinigung erfolgte durch Chromatographie an Kieselgel mit Methylenchlorid/Isopropanol (20:1) als Eluens. Dabei erhielt man aus einer ersten grüngefärbten Fraktion 350 mg des monoacetylierten Farbstoffs 1 a. Aus einer zweiten, ebenfalls grüngefärbten Zone wurden 3,1 g des Farbstoffs 1 b gewonnen.

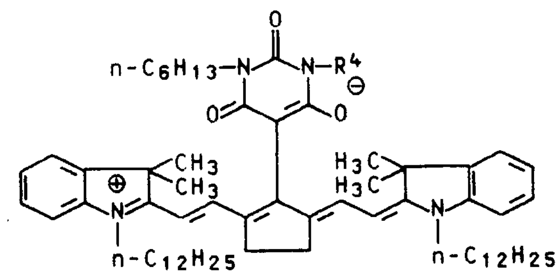

Farbstoff 1 a : $R^4 = C_2H_4\text{-}OCOCH_3$
Farbstoff 1 b : $R^4 = C_2H_4\text{-}OH$

Absorptionsmaximum [nm] (in Ethanol)

Farbstoff 1a: 785, $\epsilon$ = 319600
Farbstoff 1b: 785, $\epsilon$ = 301112

Die im folgenden aufgeführten Farbstoffe wurden analog Beispiel 1 hergestellt. Das bei der Bestimmung des Absorptionsmaximums verwendete Lösungsmittel ist ebenfalls angegeben. (Ac steht hierbei für Acetyl. MeOH bedeutet Methanol. EtOH bedeutet Ethanol. THF bedeutet Tetrahydrofuran. Der Rest $C_3H_6OC_8H_{17}$ steht für

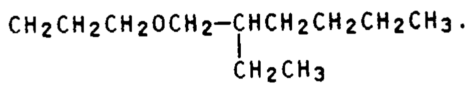

Tabelle 1

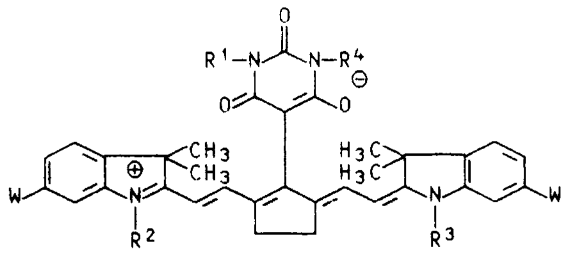

| Bsp.-Nr. | $R^1$ | $R^4$ | W | $R^2$, $R^3$ | λmax [nm] | ε |
|---|---|---|---|---|---|---|
| 2 | $n\text{-}C_4H_9$ | $C_2H_4OH$ | H | $n\text{-}C_6H_{13}$ | | |
| 3 | $n\text{-}C_6H_{13}$ | $C_2H_4OH$ | H | $n\text{-}C_6H_{13}$ | | |
| 4 | $n\text{-}C_4H_9$ | $C_2H_4OH$ | H | $n\text{-}C_{12}H_{25}$ | 786 (EtOH) | 324 034 |
| 5 | $C_2H_4OH$ | $C_2H_4OH$ | H | $n\text{-}C_8H_{17}$ | | |
| 6 | $C_2H_4OH$ | $C_2H_4OAc$ | H | $n\text{-}C_8H_{17}$ | | |
| 7 | $n\text{-}C_6H_{13}$ | $C_2H_4OH$ | H | $C_2H_4OC_2H_4OC_2H_5$ | 781 (MeOH) | 189 800 |
| 8 | $n\text{-}C_6H_{13}$ | $C_2H_4OH$ | Cl | $C_{12}H_{25}$ | | |
| 9 | $n\text{-}C_4H_9$ | $C_3H_6OC_8H_{17}$ | H | $CH_2CH(C_2H_5)C_4H_9$ | | |
| 10 | $C_3H_6OC_8H_{17}$ | $C_3H_6OC_8H_{17}$ | H | $CH_2CH(C_2H_5)C_4H_9$ | | |

Tabelle 2

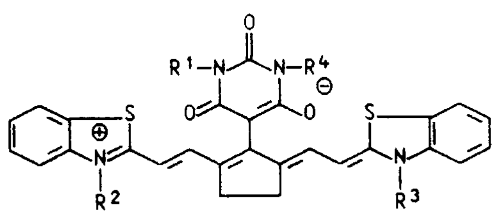

| Bsp.-Nr. | $R^1$ | $R^4$ | $R^2$, $R^3$ | λmax [nm] | ε |
|---|---|---|---|---|---|
| 11 | $n\text{-}C_6H_{13}$ | $C_2H_4OH$ | $n\text{-}C_6H_{13}$ | | |
| 12 | $n\text{-}C_4H_9$ | $C_2H_4OH$ | $n\text{-}C_6H_{13}$ | | |
| 13 | $n\text{-}C_6H_{13}$ | $C_2H_4OH$ | $n\text{-}C_8H_{17}$ | | |
| 14 | $n\text{-}C_6H_{13}$ | $C_2H_4OH$ | $n\text{-}C_6H_{13}$ | | |
| 15 | $n\text{-}C_6H_{13}$ | $C_2H_4OH$ | $n\text{-}C_6H_{13}$ | | |
| 16 | $C_2H_4OAc$ | $C_2H_4OAc$ | $CH_2CH(C_2H_5)C_4H_9$ | | |
| 17 | $n\text{-}C_6H_{13}$ | $C_2H_4OH$ | $(CH_2)_8OH$ | 816 ($CH_2Cl_2$) | |
| 18 | $n\text{-}C_6H_{13}$ | $C_2H_4OH$ | $C_2H_4OC_2H_4OC_2H_5$ | 816 ($CH_2Cl_2$) | |
| 19 | $n\text{-}C_4H_9$ | $C_3H_6OC_8H_{17}$ | $n\text{-}C_6H_{13}$ | | |
| 20 | $C_3H_6OC_8H_{17}$ | $C_3H_6OC_8H_{17}$ | $n\text{-}C_8H_{17}$ | | |

Beispiel 21

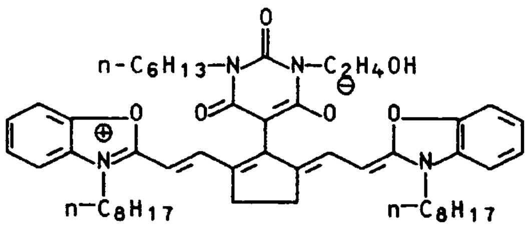

Beispiel 22

Zu einer Lösung von 0,145 g eines trimerisierten Hexamethylendiisocyanats (NCO-Zahl 22,1) in 40 ml abs. Methylenchlorid wurden 0,5 g (0,5 mmol) des Farbstoffs 1 b (Bsp. 1) gefügt und die Reaktionslösung 48 Stunden bei Raumtemperatur unter Feuchtigkeitsausschluß gerührt. Anschließend engte man unter vermindertem Druck ein, nahm den Rückstand in Methyl-tert-butyl-ether auf und saugte ab. Man erhielt 0,5 g oligomeren Farbstoff. UV: $\lambda_{max}$ = 770 nm in Methylenchlorid
Analog Beispiel 22 wurden auch die Farbstoffe 2, 3, 4, 5, 6, 11, 12, 14, 15, 16, 17, 18, 19, 20 und 21 mit trimerisiertem Hexamethylendiisocyanat umgesetzt.

B. Herstellung des optischen Aufzeichnungsmediums

Anwendungsbeispiel 1

0,0516 g eines Styrol-Acrylnitril-Copolymers wurden in 0,464 g 1,1,2-Trichlorethan gelöst und 0,1204 g Farbstoff Nr. 8 zugesetzt. Anschließend fügte man noch 7,96 g 1,1,2-Trichlorethan hinzu und ließ 1 Stunde bei Raumtemperatur rühren. Danach wurde filtriert und bei 2000 Upm auf ein Polymethylmethacrylat (PMMA)-Substrat aufgeschleudert.

Die Schicht ist homogen und ohne Fehler. Die Schichtdicke beträgt 135 nm und weist eine breite Absorptionsbande auf. Bei 830 nm beträgt die Extinktion 0,9.

Mit einem auf einen Drehtisch montierten AlGaAs-Laser ($\lambda$ = 820 nm) wurden einzelne, etwa 1 $\mu$ große Löcher in die aktive Schicht eingeschrieben. Die Empfindlichkeit der Schicht war besser als 1 nJ/Loch. Beim Auslesen der Punkte wurde ein ausgezeichnetes Signal:Rausch-Verhältnis gefunden.

Anwendungsbeispiel 2

0,8 g oligomerisierter Farbstoff Nr. 22 wurden mit 9,2 g 1,1,2-Trichlorethan versetzt und 15 Minuten bei Raumtemperatur gerührt. Anschließend filtrierte man die Lösung und schleuderte bei 3000 Upm auf ein PMMA-Substrat auf.

Die Schicht ist sehr homogen und zeigt eine breite Absorptionsbande mit einem Maximum bei 810 nm.

Mit einem auf einen Drehtisch montierten AlGaAs-Laser ($\lambda$ = 820 nm) wurden einzelne, etwa 1 $\mu$ große Löächer in die aktive Schicht eingeschrieben. Die Empfindlichkeit der Schicht war besser als 1 nJ/Loch. Beim Auslesen der Punkte wurde ein ausgezeichnetes Signal:Rausch-Verhältnis gefunden.

## Patentansprüche

1. Methinfarbstoffe der Formel I

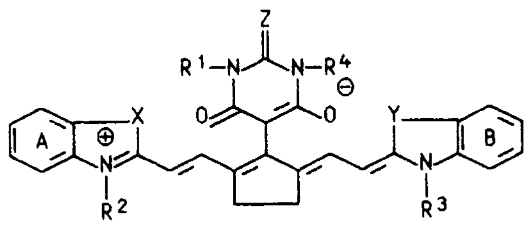

(I),

in der

| | |
|---|---|
| $R^1$ und $R^4$ | gleich oder verschieden sind und unabhängig voneinander jeweils $C_1$-$C_{22}$-Alkyl, das gegebenenfalls durch Hydroxy, Phenyl, Halogen, $C_1$-$C_4$-Alkanoyl, Carboxy, $C_1$-$C_4$-Alkanoylamino, $C_1$-$C_4$-Alkoxycarbonyl oder $C_1$-$C_4$-Alkoxycarbonylamino substituiert und/oder durch ein oder mehrere Sauerstoffatome, eine oder mehrere Iminogruppen oder eine oder mehrere $C_1$-$C_4$-Alkyliminogruppen unterbrochen ist, |
| $R^2$ und $R^3$ | gleich oder verschieden sind und unabhängig voneinander jeweils $C_6$-$C_{22}$-Alkyl, das gegebenenfalls durch Hydroxy Phenyl, Halogen, $C_1$-$C_4$-Alkanoyl, Carboxy, $C_1$-$C_4$-Alkanoylamino, $C_1$-$C_4$-Alkoxycarbonyl oder $C_1$-$C_4$-Alkoxycarbonylamino substituiert und/oder durch ein oder mehrere Sauerstoffatome, eine oder mehrere Iminogruppen oder eine oder mehrere $C_1$-$C_4$-Alkyliminogruppen unterbrochen ist, oder gegebenenfalls durch $C_1$-$C_4$-Alkyloder Halogen substituiertes $C_5$-$C_7$-Cycloalkyl, |
| X und Y | gleich oder verschieden sind und unabhängig voneinander jeweils Sauerstoff, Schwefel, 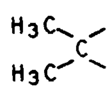 oder -CH=CH- und |
| Z | Sauerstoff oder Schwefel bedeuten und die Ringe A und B benzoanelliert und/oder durch $C_1$-$C_{22}$-Alkyl, $C_1$-$C_{12}$-Alkoxy, $C_1$-$C_{12}$-Alkylthio, Cyano, $C_1$-$C_{12}$-Mono- oder Dialkylamino, Pyrrolidino, Piperidino, Morpholino, Piperazino, N-($C_1$-$C_4$-Alkyl)piperazino, Chlor oder Brom substituiert sein können, sowie Methinfarbstoffe, erhältlich durch Umsetzung von einem organischen Mono- oder Polyisocyanat mit solchen Methinfarbstoffen der Formel I, in der nur die Reste $R^1$ und/oder $R^4$ eine mit einem organischen Mono- oder Polyisocyanat reagierende Gruppe aufweisen, mit der Maßgabe, daß die Reste $R^2$ und/oder $R^3$ auch die Bedeutung des obengenannten Rests $R^1$ aufweisen können, wenn mindestens einer der beiden Reste X und Y für -CH=CH- steht und/oder die Methinfarbstoffe der Formel I mit einem organischen Mono- oder Polyisocyanat umgesetzt wurden. |

2. Methinfarbstoffe der Formel I gemäß Anspruch 1, wobei $R^1$ und $R^4$ unabhängig voneinander $C_1$-$C_{22}$-Alkyl, das gegebenenfalls durch 1 bis 3 Sauerstoffatome unterbrochen ist, $C_1$-$C_{12}$-Hydroxyalkyl oder $C_1$-$C_{12}$-Carboxyalkyl, $R^2$ und $R^3$ unabhängig voneinander $C_6$-$C_{22}$-Alkyl, das gegebenenfalls durch 1 bis 3 Sauerstoffe unterbrochen ist, $C_6$-$C_{22}$-Bromalkyl, $C_6$-$C_{22}$-Carboxyalkyl oder ($C_1$-$C_4$-Alkoxycarbonyl)-$C_6$-$C_{22}$-alkyl und Z Sauerstoff bedeuten und X, Y und die Ringe A und B jeweils die in Anspruch 1 genannte Bedeutung besitzen.

3. Methinfarbstoffe der Formel I gemäß Anspruch 1, wobei $R^1$ und $R^4$ unabhängig voneinander $C_1$-$C_{12}$-Alkyl, das gegebenenfalls durch 1 bis 3 Sauerstoffatome unterbrochen ist, oder $C_1$-$C_{12}$-Hydroxyalkyl, $R^2$ und $R^3$ unabhängig voneinander $C_6$-$C_{12}$-Alkyl, das gegebenenfalls durch 1 bis 3 Sauerstoffatome unterbrochen ist, und Z Sauerstoff bedeuten, die Ringe A und B unsubstituiert oder durch Chlor substituiert sind und X und Y jeweils die in Anspruch 1 genannte Bedeutung besitzen.

4. Methinfarbstoffe gemäß Anspruch 1, erhältlich durch Umsetzung von einem organischen Mono- oder Polyisocyanat mit solchen Methinfarbstoffen der Formel I, in der nur der Rest $R^4$ eine mit einem organischen Mono- oder Polyisocyanat reagierende Gruppe aufweist und wobei $R^4$ $C_1$-$C_{22}$-Hydroxyalkyl bedeutet.

5. Optisches Aufzeichnungsmedium, enthaltend einen Träger und eine gegenüber Laserlicht empfindliche, Farbstoff enthaltende Schicht, dadurch gekennzeichnet, daß der Farbstoff ein Methinfarbstoff der Formel I

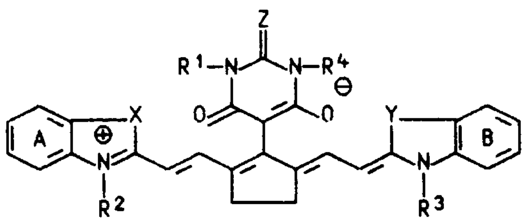

(I)

ist, in der

$R^1$ und $R^4$ gleich oder verschieden sind und unabhängig voneinander jeweils $C_1$-$C_{22}$-Alkyl, das gegebenenfalls durch Hydroxy, Phenyl, Halogen, $C_1$-$C_4$-Alkanoyl, Carboxy, $C_1$-$C_4$-Alkanoylamino, $C_1$-$C_4$-Alkoxycarbonyl oder $C_1$-$C_4$-Alkoxycarbonylamino substituiert und/oder durch ein oder mehrere Sauerstoffatome, eine oder mehrere Iminogruppen oder eine oder mehrere $C_1$-$C_4$-Alkyliminogruppen unterbrochen ist,

$R^2$ und $R^3$ gleich oder verschieden sind und unabhängig voneinander jeweils $C_6$-$C_{22}$-Alkyl, das gegebenenfalls durch Hydroxy, Phenyl, Halogen, $C_1$-$C_4$-Alkanoyl, Carboxy, $C_1$-$C_4$-Alkanoylamino, $C_1$-$C_4$-Alkoxycarbonyl oder $C_1$-$C_4$-Alkoxycarbonylamino substituiert und/oder durch ein oder mehrere Sauerstoffatome, eine oder mehrere Iminogruppen oder eine oder mehrere $C_1$-$C_4$-Alkyliminogruppen unterbrochen ist, oder gegebenenfalls durch $C_1$-$C_4$-Alkyl oder Halogen substituiertes $C_5$-$C_7$-Cycloalkyl,

X und Y gleich oder verschieden sind und unabhängig voneinander jeweils Sauerstoff, Schwefel,

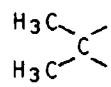

oder -CH = CH- und

Z Sauerstoff oder Schwefel bedeuten, und die Ringe A und B benzoanelliert und/oder durch $C_1$-$C_{22}$-Alkyl, $C_1$-$C_{12}$-Alkoxy, $C_1$-$C_{12}$-Alkylthio, Cyano, $C_1$-$C_{12}$-Mono- oder Dialkylamino, Pyrrolidino, Piperidino, Morpholino, Piperazino, N-($C_1$-$C_4$-Alkyl)piperazino, Chlor oder Brom substituiert sein können, oder daß der Farbstoff ein Methinfarbstoff ist, der erhältlich ist durch Umsetzung von einem organischen Mono- oder Polyisocyanat mit solchen Methinfarbstoffen der Formel I, in der nur die Reste $R^1$ und/oder $R^4$ eine mit einem organischen Mono- oder Polyisocyanat reagierende Gruppe aufweisen, mit der Maßgabe, daß

die Reste $R^2$ und/oder $R^3$ auch die Bedeutung des obengenannten Rests $R^1$ aufweisen können, wenn mindestens einer der beiden Reste X und Y für -CH = CH- steht und/oder die Methinfarbstoffe der Formel I mit einem organischen Mono- oder Polyisocyanat umgesetzt wurden.

6. Optisches Aufzeichnungsmedium gemäß Anspruch 5, enthaltend einen Methinfarbstoff der Formel I, wobei $R^1$ und $R^4$ unabhängig voneinander $C_1$-$C_{22}$-Alkyl, das gegebenenfalls durch 1 bis 3 Sauerstoffatome unterbrochen ist, $C_1$-$C_{12}$-Hydroxyalkyl oder $C_1$-$C_{12}$-Carboxyalkyl, $R^2$ und $R^3$ unabhängig voneinander $C_6$-$C_{22}$-Alkyl, das gegebenenfalls durch 1 bis 3 Sauerstoffe unterbrochen ist, $C_6$-$C_{22}$-Bromalkyl, $C_6$-$C_{22}$-Carboxyalkyl oder ($C_1$-$C_4$-Alkoxycarbonyl)-$C_6$-$C_{22}$-alkyl und Z Sauerstoff bedeuten und X, Y und die Ringe A und B jeweils die in Anspruch 1 genannte Bedeutung besitzen.

7. Optisches Aufzeichnungsmedium gemäß Anspruch 5, enthaltend einen Methinfarbstoff der Formel I, wobei $R^1$ und $R^4$ unabhängig voneinander $C_1$-$C_{12}$-Alkyl, das gegebenenfalls durch 1 bis 3 Sauerstoffatome unterbrochen ist, oder $C_1$-$C_{12}$-Hydroxyalkyl, $R^2$ und $R^3$ unabhängig voneinander $C_6$-$C_{12}$-Alkyl, das gegebenenfalls durch 1 bis 3 Sauerstoffatome unterbrochen ist, und Z Sauerstoff bedeuten, die Ringe A und B unsubstituiert oder durch Chlor substituiert sind und X und Y jeweils die in Anspruch 1 genannte Bedeutung besitzen.

8. Optisches Aufzeichnungsmedium gemäß Anspruch 5, enthaltend einen Methinfarbstoff, der erhältlich ist durch Umsetzung von einem organischen Mono- oder Polyisocyanat mit solchen Methinfarbstoffen der Formel I, in der nur der Rest $R^4$ eine mit einem organischen Mono- oder Polyisocyanat reagierende Gruppe aufweist und wobei $R^4$ $C_1$-$C_{22}$-Hydroxyalkyl bedeutet.

**Claims**

1. A methine dye of the formula I

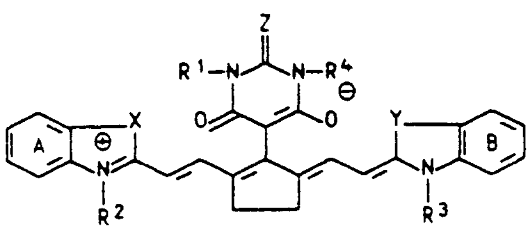

(I)

where

$R^1$ and $R^4$ are identical or different and each is independently of the other $C_1$-$C_{22}$-alkyl, which may be unsubstituted or substituted by hydroxyl, phenyl, halogen, $C_1$-$C_4$-alkanoyl, carboxyl, $C_1$-$C_4$-alkanoylamino, $C_1$-$C_4$-alkoxycarbonyl or $C_1$-$C_4$-alkoxycarbonylamino and/or interrupted by one or more oxygen atoms, one or more imino groups or one or more $C_1$-$C_4$-alkylimino groups,

$R^2$ and $R^3$ are identical or different and each is independently of the other $C_6$-$C_{22}$-alkyl, which may be unsubstituted or substituted by hydroxyl, phenyl, halogen, $C_1$-$C_4$-alkanoyl, carboxyl, $C_1$-$C_4$-alkanoylamino, $C_1$-$C_4$-alkoxycarbonyl or $C_1$-$C_4$-alkoxycarbonylamino and/or interrupted by one or more oxygen atoms, one or more imino groups or one or more $C_1$-$C_4$-alkylimino groups, or is unsubstituted or $C_1$-$C_4$-alkyl- or halogen-substituted $C_5$-$C_7$-cycloalkyl,

X and Y are identical or different and each is independently of the other oxygen, sulfur,

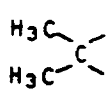

or -CH=CH- and

Z is oxygen or sulfur, and the rings A and B may be benzofused and/or substituted by $C_1$-$C_{22}$-alkyl, $C_1$-$C_{12}$-alkoxy, $C_1$-$C_{12}$-alkylthio, cyano, $C_1$-$C_{12}$-mono- or dialkyl-amino, pyrrolidino, piperidino, morpholino, piperazino, N-($C_1$-$C_4$-alkyl)piperazino, chlorine or bromine, and a methine dye obtainable by reacting an organic monoisocyanate or polyisocyanate with a methine dye of the formula I where only the radicals $R^1$ and/or $R^4$ have a group which reacts with an organic monoisocyanate or polyisocyanate, with the proviso that the radicals $R^2$ and/or $R^3$ can also have the meaning of the abovementioned radical $R^1$ if at least one of the two radicals X and Y is -CH=CH- and/or the methine dye of the formula I has been reacted with an organic monoisocyanate or polyisocyanate.

**2.** A methine dye of the formula I as claimed in claim 1, where $R^1$ and $R^4$ are each independently of the other $C_1$-$C_{22}$-alkyl, which may be interrupted by from 1 to 3 oxygen atoms, $C_1$-$C_{12}$-hydroxyalkyl or $C_1$-$C_{12}$-carboxyalkyl, $R^2$ and $R^3$ are each independently of the other $C_6$-$C_{22}$-alkyl, which may be interrupted by from 1 to 3 oxygen atoms, $C_6$-$C_{22}$-bromoalkyl, $C_6$-$C_{22}$-carboxyalkyl or ($C_1$-$C_4$-alkoxycarbonyl)-$C_6$-$C_{22}$-alkyl, Z is oxygen, and X, Y and the rings A and B are each as defined in claim 1.

**3.** A methine dye of the formula I as claimed in claim 1, where $R^1$ and $R^4$ are each independently of the other $C_1$-$C_{12}$-alkyl, which may be interrupted by from 1 to 3 oxygen atoms, or $C_1$-$C_{12}$-hydroxyalkyl, $R^2$ and $R^3$ are each independently of the other $C_6$-$C_{12}$-alkyl, which may be interrupted by from 1 to 3 oxygen atoms, Z is oxygen, the rings A and B are each unsubstituted or substituted by chlorine, and X and Y are each as defined in claim 1.

**4.** A methine dye as claimed in claim 1 obtainable by reacting an organic mono- or polyisocyanate with a methine dye of the formula I where only the radical $R^4$ has a group which reacts with an organic mono- or polyisocyanate and $R^4$ is $C_1$-$C_{22}$-hydroxyalkyl.

**5.** An optical recording medium containing a base and a layer which is sensitive to laser light and contains a dye, wherein the dye is a methine dye of the formula I

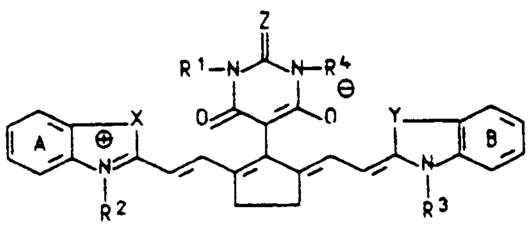

(I)

where

| | |
|---|---|
| $R^1$ and $R^4$ | are identical or different and each is independently of the other $C_1$-$C_{22}$-alkyl, which may be unsubstituted orsubstituted by hydroxyl, phenyl, halogen, $C_1$-$C_4$-alkanoyl, carboxyl, $C_1$-$C_4$-alkanoylamino, $C_1$-$C_4$-alkoxycarbonyl or $C_1$-$C_4$-alkoxycarbonylamino and/or interrupted by one or more oxygen atoms, one or more imino groups or one or more $C_1$-$C_4$-alkylimino groups, |
| $R^2$ and $R^3$ | are identical or different and each is independently of the other $C_6$-$C_{22}$-alkyl, which may be unsubstituted or substituted by hydroxyl, phenyl, halogen, $C_1$-$C_4$-alkanoyl, carboxyl, $C_1$-$C_4$-alkanoylamino, $C_1$-$C_4$-alkoxycarbonyl or $C_1$-$C_4$-alkoxycarbonylamino and/or interrupted by one or more oxygen atoms, one or more imino groups or one or more $C_1$-$C_4$-alkylimino groups, or is unsubstituted or $C_1$-$C_4$-alkyl- or halogen-substituted $C_5$-$C_7$-cycloalkyl, |
| X and Y | are identical or different and each is independently of the other oxygen, sulfur, 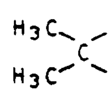 or -CH = CH- and |
| Z | is oxygen or sulfur, and the rings A and B may be benzofused and/or substituted by $C_1$-$C_{22}$-alkyl, $C_1$-$C_{12}$-alkoxy, $C_1$-$C_{12}$-alkylthio, cyano, $C_1$-$C_{12}$-mono- or dialkyl-amino, pyrrolidino, piperidino, morpholino, piperazino, N-($C_1$-$C_4$-alkyl)piperazino, chlorine or bromine, or wherein the dye is a methine dye obtainable by reacting an organic monoisocyanate or polyisocyanate with a methine dye of the formula I where only the radicals $R^1$ and/or $R^4$ have a group which reacts with an organic monoisocyanate or polyisocyanate, with the proviso that |

the radicals $R^2$ and/or $R^3$ can also have the meaning of the abovementioned radical $R^1$ if at least one of the two radicals X and Y is -CH = CH- and/or the methine dye of the formula I has been reacted with an

organic monoisocyanate or polyisocyanate.

**6.** An optical recording medium as claimed in claim 5, containing a methine dye of the formula I, where $R^1$ and $R^4$ are each independently of the other $C_1$-$C_{22}$-alkyl, which may be interrupted by from 1 to 3 oxygen atoms, $C_1$-$C_{12}$-hydroxyalkyl or $C_1$-$C_{12}$-carboxyalkyl, $R^2$ and $R^3$ are each independently of the other $C_6$-$C_{22}$-alkyl, which may be interrupted by from 1 to 3 oxygen atoms, $C_6$-$C_{22}$-bromoalkyl, $C_6$-$C_{22}$-carboxyalkyl or ($C_1$-$C_4$-alkoxycarbonyl)-$C_6$-$C_{22}$-alkyl, Z is oxygen, and X, Y and the rings A and B are each as defined in claim 1.

**7.** An optical recording medium as claimed in claim 5, containing a methine dye of the formula I where $R^1$ and $R^4$ are each independently of the other $C_1$-$C_{12}$-alkyl, which may be interrupted by from 1 to 3 oxygen atoms, or $C_1$-$C_{12}$-hydroxyalkyl, $R^2$ and $R^3$ are each independently of the other $C_6$-$C_{12}$-alkyl, which may be interrupted by from 1 to 3 oxygen atoms, Z is oxygen, the rings A and B are each unsubstituted or substituted by chlorine, and X and Y are each as defined in claim 1.

**8.** An optical recording medium as claimed in claim 5, containing a methine dye obtainable by reacting an organic mono- or polyisocyanate with a methine dye of the formula I where only the radical $R^4$ has a group which reacts with an organic mono- or polyisocyanate and $R^4$ is $C_1$-$C_{22}$-hydroxyalkyl.

## Revendications

**1.** Colorants méthiniques de la formule I

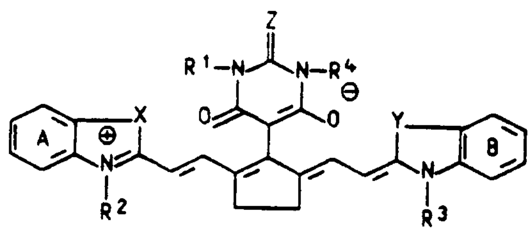

(I),

dans laquelle

$R^1$ et $R^4$ sont identiques ou différents et représentent, chacun indépendamment l'un de l'autre, à chaque fois un radical alkyle en $C_1$-$C_{22}$, qui est éventuellement substitué par des radicaux hydroxyle, phényle, des atomes d'halogènes, des radicaux alcanoyle en $C_1$-$C_4$, carboxyle, alcanoyl($C_1$-$C_4$)amino, alcoxy($C_1$-$C_4$)carbonyle, ou alcoxy($C_1$-$C_4$)-carbonylamino et/ou interrompu par un ou plusieurs atomes d'oxygène, un ou plusieurs radicaux imino, ou un ou plusieurs radicaux alkyl($C_1$-$C_4$)imino,

$R^2$ et $R^3$ sont identiques ou différents et représentent, chacun indépendamment l'un de l'autre, à chaque fois un radical alkyle en $C_6$-$C_{22}$ qui est éventuellement substitué par des radicaux hydroxyle, phényle, des atomes d'halogènes, des radicaux alcanoyle en $C_1$-$C_4$, carboxyle, alcanoyl($C_1$-$C_4$)amino, alcoxy($C_1$-$C_4$)carbonyle, ou alcoxy($C_1$-$C_4$)-carbonylamino et/ou interrompu par un plusieurs atomes d'oxygène, un ou plusieurs radicaux imino, ou un ou plusieurs radicaux alkyl($C_1$-$C_4$)imino, ou un radical cycloalkyle en $C_5$-$C_7$ éventuellement substitué par des radicaux alkyle en $C_1$-$C_4$ ou des atomes d'halogènes,

X et Y sont identiques ou différents et représentent, chacun indépendamment l'un de l'autre, à chaque fois un atome d'oxygène, un atome de soufre, un radical

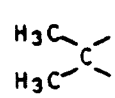

ou -CH=CH- et

Z représente un atome d'oxygène ou un atome de soufre et les noyaux A et B peuvent

être condensés et/ ou substitués par des radicaux alkyle en $C_1$-$C_{22}$, alcoxy en $C_1$-$C_{12}$, alkylthio en $C_1$-$C_{12}$, cyano, mono- ou dialkyl($C_1$-$C_{12}$)amino, pyrrolidino, pipéridino, morpholino, pipérazino, N-(alkyl en $C_1$-$C_4$)-pipérazino, du chlore ou du brome, ainsi que des colorants méthiniques, que l'on peut obtenir par la réaction d'un mono- ou polyisocyanate organique avec des colorants méthiniques de la formule I dans laquelle uniquement les restes $R^1$ et/ou $R^4$ présentent un radical réagissant avec un mono- ou polyisocyanate organique, avec la condition que les restes $R^2$ et/ou $R^3$ peuvent aussi posséder les significations du reste $R^1$ susmentionné lorsqu'au moins l'un des restes X et Y représente -CH = CH- et/ou les colorants méthiniques de la formule I ont été mis en réaction avec un mono- ou polyisocyanate organique.

2. Colorants méthiniques de la formule I suivant la revendication 1, caractérisés en ce que $R^1$ et $R^2$ représentent, chacun indépendamment l'un de l'autre, un radical alkyle en $C_1$-$C_{22}$, qui est éventuellement interrompu par de 1 à 3 atomes d'oxygène, un radical hydroxyalkyle en $C_1$-$C_{12}$ ou carboxyalkyle en $C_1$-$C_{12}$, $R^2$ et $R^3$ représentent, chacun indépendamment l'un de l'autre, un radical alkyle en $C_6$-$C_{22}$, qui est éventuellement interrompu par de 1 à 3 atomes d'oxygène, un radical bromalkyle en $C_6$-$C_{22}$, carboxyalkyle en $C_6$-$C_{22}$, ou (alcoxy($C_1$-$C_4$)carbonyl)-alkyle en $C_6$-$C_{22}$ et Z représente un atome d'oxygène et X, Y et les noyaux A et B possèdent chacun les significations qui leur ont été attribuées dans la revendication 1.

3. Colorants méthiniques de la formule I suivant la revendication 1, caractérisés en ce que $R^1$ et $R^4$ représentent, chacun indépendamment l'un de l'autre, un radical alkyle en $C_1$-$C_{12}$, qui est éventuellement interrompu par de 1 à 3 atomes d'oxygène, ou un radical hydroxyalkyle en $C_1$-$C_{12}$, $R^2$ et $R^3$ représentent, chacun indépendamment l'un de l'autre, un radical alkyle en $C_6$-$C_{12}$, qui est éventuellement interrompu par de 1 à 3 atomes d'oxygène et Z représente un atome d'oxygène, les noyaux A et B ne sont pas substitués ou substitués par du chlore et Z et Y possèdent les significations qui leur ont été attribuées dans la revendication 1.

4. Colorants méthiniques suivant la revendication 1, que l'on peut obtenir par la réaction d'un mono- ou polyisocyanate organique avec des colorants méthiniques de la formule I dans laquelle uniquement le reste $R^4$ présente un groupe réagissant avec un mono- ou polyisocyanate organique et $R^4$ représente un radical hydroxyalkyle en $C_1$-$C_{22}$.

5. Matériau ou milieu d'enregistrement optique, qui contient un support et une couche contenant un colorant sensible à la lumière d'un laser, caractérisé en ce que le colorant est un colorant méthinique de la formule I

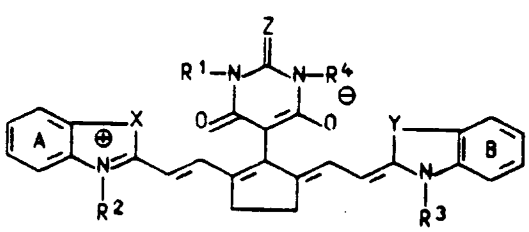

(I)

dans laquelle

$R^1$ et $R^4$ sont identiques ou différents et représentent, chacun indépendamment l'un de l'autre, à chaque fois un radical alkyle en $C_1$-$C_{22}$, qui est éventuellement substitué par des radicaux hydroxyle, phényle, des atomes d'halogènes, des radicaux alcanoyle en $C_1$-$C_4$, carboxyle, alcanoyl($C_1$-$C_4$)amino, alcoxy($C_1$-$C_4$)carbonyle, ou alcoxy($C_1$-$C_4$)-carbonylamino et/ou interrompu par un ou plusieurs atomes d'oxygène, un ou plusieurs radicaux imino, ou un ou plusieurs radicaux alkyl($C_1$-$C_4$)imino,

$R^2$ et $R^3$ sont identiques ou différents et représentent, chacun indépendamment l'un de l'autre, à chaque fois un radical alkyle en $C_6$-$C_{22}$ qui est éventuellement substitué par des radicaux hydroxyle, phényle, des atomes d'halogènes, des radicaux alcanoyle en $C_1$-$C_4$, carboxyle, alcanoyl($C_1$-$C_4$)amino, alcoxy($C_1$-$C_4$)carbonyle, ou alcoxy($C_1$-$C_4$)-

carbonylamino et/ou interrompu par un plusieurs atomes d'oxygène, un ou plusieurs radicaux imino, ou un ou plusieurs radicaux alkyl($C_1$-$C_4$)imino, ou un radical cycloalkyle en $C_5$-$C_7$ éventuellement substitué par des radicaux alkyle en $C_1$-$C_4$ ou des atomes d'halogènes,

X et Y sont identiques ou différents et représentent, chacun indépendamment l'un de l'autre, à chaque fois un atome d'oxygène, un atome de soufre, un radical

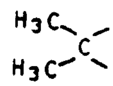

ou -CH=CH- et

Z représente un atome d'oxygène ou un atome de soufre et les noyaux A et B peuvent être condensés et/ou substitués par des radicaux alkyle en $C_1$-$C_{22}$, alcoxy en $C_1$-$C_{12}$, alkylthio en $C_1$-$C_{12}$, cyano, mono- ou dialkyl($C_1$-$C_{12}$)amino, pyrrolidino, pipéridino, morpholino, pipérazino, N-(alkyl en $C_1$-$C_4$)-pipérazino, du chlore ou du brome, ainsi que des colorants méthiniques, que l'on peut obtenir par la réaction d'un mono- ou polyisocyanate organique avec des colorants méthiniques de la formule I dans laquelle uniquement les restes $R^1$ et/ou $R^4$ présentent un radical réagissant avec un mono- ou polyisocyanate organique, avec la condition que les restes $R^2$ et/ou $R^3$ peuvent aussi posséder les significations du reste $R^1$ susmentionné lorsqu'au moins l'un des restes X et Y représente -CH = CH- et/ou les colorants méthiniques de la formule I ont été mis en réaction avec un mono- ou polyisocyanate organique.

**6.** Matériau ou milieu d'enregistrement optique suivant la revendication 5, caractérisé en ce qu'il contient un colorant méthinique de la formule I dans laquelle $R^1$ et $R^2$ représentent, chacun indépendamment l'un de l'autre, un radical alkyle en $C_1$-$C_{22}$, qui est éventuellement interrompu par de 1 à 3 atomes d'oxygène, un radical hydroxyalkyle en $C_1$-$C_{12}$ ou carboxyalkyle en $C_1$-$C_{12}$, $R^2$ et $R^3$ représentent, chacun indépendamment l'un de l'autre, un radical alkyle en $C_6$-$C_{22}$, qui est éventuellement interrompu par de 1 à 3 atomes d'oxygène, un radical bromalkyle en $C_6$-$C_{22}$, carboxyalkyle en $C_6$-$C_{22}$, ou (alcoxy-($C_1$-$C_4$)carbonyl)-alkyle en $C_6$-$C_{22}$ et Z représente un atome d'oxygène et X, Y et les noyaux A et B possèdent chacun les significations qui leur ont été attribuées dans la revendication 1.

**7.** Matériau ou milieu d'enregistrement optique suivant la revendication 5, caractérisé en ce qu'il contient un colorant méthinique de la formule I dans laquelle $R^1$ et $R^4$ représentent, chacun indépendamment l'un de l'autre, un radical alkyle en $C_1$-$C_{12}$, qui est éventuellement interrompu par de 1 à 3 atomes d'oxygène, ou un radical hydroxyalkyle en $C_1$-$C_{12}$, $R^2$ et $R^3$ représentent, chacun indépendamment l'un de l'autre, un radical alkyle en $C_6$-$C_{12}$, qui est éventuellement interrompu par de 1 à 3 atomes d'oxygène et Z représente un atome d'oxygène, les noyaux A et B ne sont pas substitués ou substitués par du chlore et Z et Y possèdent les significations qui leur ont été attribuées dans la revendication 1.

**8.** Matériau ou milieu d'enregistrement optique suivant la revendication 5, caractérisé en ce qu'il contient un colorant méthinique que l'on peut obtenir par la réaction d'un mono- ou polyisocyanate organique avec des colorants méthiniques de la formule I dans laquelle uniquement le reste $R^4$ présente un groupe réagissant avec un mono- ou polyisocyanate organique et $R^4$ représente un radical hydroxyalkyle en $C_1$-$C_{22}$.